# EUROPÄISCHE PATENTANMELDUNG

(11) **EP 4 821 627 A1**
(43) Veröffentlichungstag der Anmeldung: **14.10.2026**
(21) Anmeldenummer: 25169274.5
(22) Anmeldetag: 08.04.2025
(51) Int. Cl.: B23K 9/28, B23K 9/32, B23K 37/003

(54) **SCHWEISSVORRICHTUNG UND VERFAHREN ZUM BETREIBEN EINER SCHWEISSVORRICHTUNG**

(71) Anmelder: FRONIUS INTERNATIONAL GmbH, 4643 Pettenbach (AT)
(72) Erfinder: VORABERGER, Manuel, 4643 Pettenbach (AT); ORTNER, Roland, 4643 Pettenbach (AT)
(74) Vertreter: SONN Patentanwälte GmbH & Co KG

(57) **Zusammenfassung**

Die Erfindung betrifft eine Schweißvorrichtung (1) mit einer Schweißstromquelle (2), einer Steuereinrichtung (3) und einem über ein Schlauchpaket (4) mit der Schweißstromquelle (2) verbunden Schweißbrenner (5), wobei in der Schweißstromquelle (2) zumindest ein Lüfter (6, 6') zum Abführen einer in der Schweißstromquelle (2) entstehenden Verlustwärme angeordnet ist, und ein Verfahren zum Betreiben einer Schweißvorrichtung (1). Erfindungsgemäß ist für einen optimalen Betrieb der Schweißvorrichtung (1), insbesondere eine effiziente Abführung und Verwertung der Verlustwärme ein geschlossener Kühlluftkreislauf (7) zur Führung der Verlustwärme der Schweißstromquelle (2) vorgesehen, und im Kühlluftkreislauf (7) ein Wärmetauscher (8) zur Übergabe der Verlustwärme an eine in einem geschlossenen Kühlflüssigkeitskreislauf (9) mit zumindest einer Pumpe (10) geführte Kühlflüssigkeit (F), und im Kühlflüssigkeitskreislauf (9) ein weiterer Wärmetauscher (11) zum Abführen und insbesondere zum Verwerten der Verlustwärme angeordnet.

## Beschreibung

Die Erfindung betrifft eine Schweißvorrichtung mit einer Schweißstromquelle, einer Steuereinrichtung und einem über ein Schlauchpaket mit der Schweißstromquelle verbunden Schweißbrenner, wobei in der Schweißstromquelle zumindest ein Lüfter zum Abführen einer in der Schweißstromquelle entstehenden Verlustwärme angeordnet ist.

Weiters betrifft die Erfindung ein Verfahren zum Betreiben einer Schweißvorrichtung mit einer Schweißstromquelle, einer Steuereinrichtung und einem über ein Schlauchpaket mit der Schweißstromquelle verbunden Schweißbrenner, wobei eine in der Schweißstromquelle entstehenden Verlustwärme mit zumindest einem Lüfter abgeführt wird.

Auch wenn der Übersichtlichkeit halber hauptsächlich Schweißvorrichtungen und Schweißverfahren erwähnt werden, bezieht sich die vorliegende Erfindung sowohl auf Schweißverfahren als auch auf Lötverfahren oder ähnlichen Fügeverfahren unter Einsatz eines elektrischen Lichtbogens. Auch kombinierte Lichtbogen- und Laserschweiß- oder Laserlötverfahren sind umfasst. Üblicherweise wird ein Zusatzwerkstoff, meist in Form eines Schweiß- oder Lötdrahtes aus abschmelzendem Material, in den Lichtbogen bewegt, wobei das Zusatzmaterial aufgeschmolzen wird und zur Verbindung von zumindest zwei Werkstücken oder zur Beschichtung der Oberfläche oder zur additiven Fertigung eines Werkstücks eingesetzt wird. Im Gegensatz zum Lichtbogenschweißen, bei dem auch das Material der zu verbindenden Werkstücke oder des zu beschichtenden Werkstücks aufgeschmolzen wird, kommt es beim Lichtbogenlöten zu keiner wesentlichen Aufschmelzung des Materials des Werkstücks. Wenn das Zusatzmaterial vorgewärmt wird, kann die Abschmelzleistung erhöht werden. Man spricht dabei von Heißdrahtanwendungen (Heißdrahtlöten oder Heißdrahtschweißen) im Gegensatz zu Kaltdrahtanwendungen (Kaltdrahtlöten oder Kaltdrahtschweißen), bei welchen der Zusatzwerkstoff nicht vorgewärmt wird. Bei den Schweißvorrichtungen kann es sich sowohl um MIG/MAG (Metall-Inertgas/Metall-Aktivgas)-Schweißgeräte mit abschmelzbarem Schweißdraht als auch um WIG (Wolfram-Inertgas)-Schweißgeräte mit nichtabschmelzbarer Elektrode und extra zugeführtem Zusatzwerkstoff handeln. Die Schweiß- bzw. Lötvorrichtung kann manuell oder auch automatisiert bzw. durch einen Roboter bedient werden.

Die Steuereinrichtung der Schweißvorrichtung ist meist in der Schweißstromquelle angeordnet und durch einen geeigneten Mikrocontroller oder Mikroprozessor gebildet. Gegebenenfalls kann die Steuereinrichtung aber auch außerhalb der Schweißstromquelle in einer anderen Schweißkomponente oder auch außerhalb der Schweißvorrichtung, beispielsweise in einer übergeordneten Zentrale angeordnet sein.

Beim Betrieb einer Schweißvorrichtung treten in vielen Komponenten hohe Temperaturen auf, welche für einen sicheren Betrieb und eine hohe Lebensdauer der Komponenten reduziert werden müssen. Beispielsweise erzeugen viele elektronische Leistungsbauteile in der Schweißstromquelle im Betrieb Verlustwärme, welche durch Kühlkörper abgeleitet werden. Zur Verbesserung der Kühlung werden Lüfter bzw. Ventilatoren eingesetzt, welche die in der Schweißstromquelle erzeugte Verlustwärme abführen und frische Kühlluft ansaugen. Zu diesem Zweck sind in der Schweißstromquelle Kühlgitter angeordnet, über welche in nachteiliger Weise auch Schmutzpartikel in die Schweißstromquelle gelangen können.

Im Schweißbrenner treten aufgrund des Lichtbogens ebenfalls hohe Temperaturen auf, welche meist über Wasserkühlung abgeführt werden. Auch das Schlauchpaket zwischen der Schweißstromquelle und dem Schweißbrenner und allenfalls auch ein Drahtvorschub für einen abschmelzbaren Schweißdraht können ebenfalls gekühlt werden.

Beispielsweise beschreiben die DE 10 2018 007 687 A1 und die WO 2022/101159 A1 herkömmliche Schweißvorrichtungen mit Luftkühlung sowie die EP 2 673 103 B1 Schweißvorrichtungen mit Flüssigkeitskühlung.

Die beim Betrieb einer Schweißvorrichtung entstehende Verlustwärme wird in der Regel an die Umgebung abgegeben und nicht genutzt und geht deshalb verloren. Abgesehen von dieser Energieverschwendung wird auch die Umgebung der Schweißvorrichtung entsprechend erwärmt, was die Kühlung der Schweißvorrichtung negativ beeinflussen kann und wodurch eine Kühlung der Umgebung notwendig sein kann. Dies wird insbesondere bei Räumen mit besonders vielen Schweißvorrichtungen, wie Fertigungshallen, oder unter beengten Bedingungen der Fall sein. Schweißvorrichtungen höherer Leistung erzeugen beispielsweise im Betrieb bis zu 800 W Verlustleistung in der Schweißstromquelle und bis zu 2000 W je Schweißbrenner. Darüber hinaus kann bei unzureichender Kühlung der Komponenten der Schweißvorrichtung durch den Einfluss der Umgebungstemperatur die Schweißleistung und bzw. oder die Lebensdauer von Teilen der Schweißvorrichtung reduziert werden. Wie bereits oben erwähnt, kann es durch die übliche Luftkühlung der Schweißstromquelle auch zu Verschmutzungen elektronischer Bauteile, wie Transformatoren, Lüfter, Kühlkörper oder dgl. in der Stromquelle kommen, wodurch ebenfalls die Lebensdauer der Schweißstromquelle reduziert werden kann. Auch der Eintritt von Feuchtigkeit bzw. Wasser in die Schweißstromquelle kann negative Einflüsse auf die darin befindlichen Bauteile haben.

Die Aufgabe der vorliegenden Erfindung besteht daher in der Schaffung einer oben genannten Schweißvorrichtung und eines oben genannten Verfahrens zum Betreiben einer solchen Schweißvorrichtung, durch welche ein in Bezug auf die Betriebstemperatur der Komponenten der Schweißvorrichtung optimaler Betrieb gewährleistet und insbesondere eine effiziente Abführung und Verwertung einer in den Komponenten der Schweißvorrichtung entstehenden Verlustwärme erzielt werden kann. Der technische Aufwand und somit die Kosten für die Implementierung sollen sich in Grenzen halten. Nachteile bekannter Verfahren und Vorrichtungen, wie eine Reduktion der Lebensdauer der Komponenten der Schweißvorrichtung, eine unzulässig hohe Erwärmung der Umgebung der Schweißvorrichtung, aber auch eine Verschmutzung der Schweißstromquelle durch Ansaugen von Kühlluft, sollen vermieden oder zumindest reduziert werden.

Gelöst wird die erfindungsgemäße Aufgabe durch eine oben erwähnte Schweißvorrichtung, wobei ein geschlossener Kühlluftkreislauf zur Führung der Verlustwärme der Schweißstromquelle vorgesehen ist, und im Kühlluftkreislauf ein Wärmetauscher zur Übergabe der Verlustwärme an eine in einem geschlossenen Kühlflüssigkeitskreislauf mit zumindest einer Pumpe geführte Kühlflüssigkeit, und im Kühlflüssigkeitskreislauf ein weiterer Wärmetauscher zum Abführen und insbesondere Verwerten der Verlustwärme angeordnet ist. Durch die Umluftkühlung der Schweißstromquelle kann einerseits eine Verschmutzung der Schweißstromquelle durch Ansaugen von Kühlluft aus der Umgebung und der Eintritt von Feuchtigkeit bzw. Wasser in die Schweißstromquelle vermieden werden. Dabei muss der geschlossene Kühlluftkreislauf nicht absolut dicht sein, sondern kann natürlich auch geringe Undichtigkeiten aufweisen. In der Praxis können bestehende Schweißstromquellen, welche üblicherweise mit entsprechenden Öffnungen zum Ansaugen von Kühlluft und Abgeben der Verlustwärme ausgestattet sind, durch eine Umrüstung dieser Kühlungsöffnungen relativ einfach umgerüstet werden. Andererseits kann durch die erfindungsgemäßen Maßnahmen die abgeführte Verlustwärme der Schweißstromquelle gezielt abgeführt bzw. verwertet und nicht an die Umgebung abgegeben werden. Die Abführung der Verlustwärme geschieht zunächst über den Wärmetauscher zwischen Kühlluftkreislauf und Kühlflüssigkeitskreislauf und in der Folge über den weiteren Wärmetauscher im Kühlflüssigkeitskreislauf. Über zwei sekundäre Anschlüsse des weiteren Wärmetauschers kann die Verlustwärme entsprechend abgeführt und insbesondere verwertet werden, beispielsweise zur Nutzung als Prozesswärme für weitere Prozesse, zum Heizen von Gebäuden oder zum Rückgewinnen von Energie eingesetzt werden. Insbesondere bei großen Fertigungsanlagen mit einer Vielzahl an Schweißvorrichtungen kann die Nutzung der Verlustwärme ein erhebliches Einsparpotential darstellen. Der Aufwand für die Implementierung der Erfindung besteht in Form der zwei Wärmetauscher und der notwendigen Leitungen für die Herstellung des Kühlluftkreislaufs und Kühlflüssigkeitskreislaufs hält sich in Grenzen und amortisiert sich rasch durch die erzielbare Energieeinsparung und allfällige Verlängerung der Lebensdauer von Komponenten der Schweißvorrichtung. Häufig ist in Kombination einer Schweißstromquelle ein Kühlmodul zur Flüssigkeitskühlung der Komponenten der Schweißvorrichtung, insbesondere des Schweißbrenners und des Schlauchpakets, allenfalls auch eines Drahtvorschubs für einen abschmelzbaren Schweißdraht, angeordnet. Idealerweise wird der Kühlluftkreislauf durch ein solches Kühlmodul geführt und werden die Wärmetauscher in dem Kühlmodul angeordnet. Für die Abführung und Verwertung der Verlustwärme befinden sich dann zwei Anschlüsse, ein Anschluss für die Zuführung des durch die Verlustwärme aufzuwärmenden Mediums und ein Anschluss für die Ableitung des durch die Verlustwärme aufgewärmten Mediums am Kühlmodul oder an der Schweißstromquelle der Schweißvorrichtung.

Vorteilhafterweise ist der Wärmetauscher im Kühlluftkreislauf durch einen Luft-Wasser-Kühler gebildet. Ein derartiger Luft-Wasser-Kühler ist üblicherweise relativ einfach aufgebaut und somit kostengünstig erhältlich. Auch die Baugröße derartiger Wärmetauscher ist relativ gering, wodurch dieser in der Schweißstromquelle bzw. einem daran angeschlossenen oder extra angeordneten Kühlmodul platziert werden kann.

Der weitere Wärmetauscher im Kühlflüssigkeitskreislauf kann durch einen Plattenwärmetauscher gebildet sein. Derartige Wärmetauscher werden maßgeblich dann angewendet, wenn beide Medien, also das wärmeabgebende Medium und das wärmeaufnehmende Medium durch eine Flüssigkeit gebildet sind. Wenn das Medium, welches die abgegebene Verlustwärme aufnimmt, durch ein Gas gebildet ist, kann anstelle eines Plattenwärmetauschers natürlich auch eine andere Art eines Wärmetauschers verwendet werden. Plattenwärmetauscher sind ebenfalls relativ einfach und in geringer Baugröße aufgebaut und meist kostengünstig erhältlich.

Wenn ohnedies ein Kühlflüssigkeitskreislauf zur Kühlung von Komponenten der Schweißvorrichtung, beispielsweise des Schweißbrenners und bzw. oder Schlauchpakets und bzw. oder eines Drahtvorschubs für einen abschmelzbaren Schweißdraht vorgesehen ist, kann der Kühlflüssigkeitskreislauf der vorliegenden Anmeldung durch Erweiterung dieses vorhandenen Kühlflüssigkeitskreislaufs gebildet sein. Durch diese Kombination kann der konstruktive Aufwand für die Realisierung der Erfindung geringer gehalten werden und darüber hinaus auch die über die Kühlflüssigkeit aufgenommene Verlustwärme abgeführt und verwertet werden. Die zu kühlenden Schweißkomponenten werden üblicherweise in Serienschaltung angeordnet, also hintereinander über die Kühlflüssigkeit gekühlt. Eine Parallelschaltung der Schweißkomponenten wäre grundsätzlich auch möglich, jedoch mit mehr Aufwand für die Regelung des Durchflusses der Kühlflüssigkeit. Als Kühlflüssigkeit kommt meist Wasser mit geeigneten Zusätzen, wie zum Beispiel Glykol oder Ethanol zur Anwendung.

Wenn zumindest ein Temperatursensor zur Messung einer Temperatur, beispielsweise der Kühlluft im Kühlluftkreislauf und bzw. oder der Kühlflüssigkeit im Kühlflüssigkeitskreislauf, vorgesehen und mit der Steuereinrichtung der Schweißstromquelle verbunden ist, ergeben sich verschiedene Überwachungs- oder Regelungsmöglichkeiten. Die gemessenen Temperaturwerte können auch nur angezeigt oder zu Dokumentationszwecken gespeichert werden. Beispielsweise eignet sich eine Temperaturmessung der Kühlluft vor und nach dem Wärmetauscher und eine Temperaturmessung der Kühlflüssigkeit vor und nach dem weiteren Wärmetauscher im Kühlflüssigkeitskreislauf. Auch die Temperatur bei den sekundären Anschlüssen des weiteren Wärmetauschers, wo die Verlustwärme abgeführt und insbesondere verwertet wird, kann hilfreich und für die Regelung des Verfahrens zweckmäßig sein.

Der zumindest eine Temperatursensor kann beispielsweise durch einen Heißleiter, Kaltleiter, ein Thermoelement, einen Widerstandstemperatursensor, einen Thermistor oder einen Infrarotsensor gebildet sein. Derartige Sensoren sind besonders kostengünstig und können aufgrund ihrer kleinen Baugröße einfach in den entsprechenden Leitungen integriert werden. Die Verbindung zur Steuereinrichtung und bzw. oder zu einem Speicher kann über Kabeln oder auch drahtlos erfolgen.

Wenn zumindest ein Durchflusssensor zur Messung des Durchflusses der Kühlflüssigkeit im Kühlflüssigkeitskreislauf vorgesehen und mit der Steuereinrichtung der Schweißstromquelle verbunden ist, kann auch der Durchfluss der Kühlflüssigkeit im Kühlflüssigkeitskreislauf zur Überwachung oder Regelung herangezogen werden. Selbstverständlich können die gemessenen Durchflusswerte auch nur zu Informationszwecken angezeigt oder zu Dokumentationszwecken gespeichert werden.

Der zumindest eine Durchflusssensor kann beispielsweise durch einen Flügelradsensor, einen Hall-Sensor oder einen Turbinensensor gebildet sein. Derartige Sensoren sind relativ kostengünstig und aufgrund ihrer miniaturisierten Bauweise leicht in den entsprechenden Leitungen der Kühlflüssigkeit zu integrieren. Wie bei den Temperatursensoren kann auch die Verbindung der Durchflusssensoren zur Steuereinrichtung und bzw. oder zu einem Speicher über Kabeln oder auch drahtlos erfolgen.

Der zumindest eine Lüfter des Kühlluftkreislaufs und bzw. oder die zumindest eine Pumpe des Kühlflüssigkeitskreislaufs können gemäß einem weiteren Merkmal der Erfindung mit der Steuereinrichtung verbunden sein, sodass der zumindest eine Lüfter und bzw. oder die zumindest eine Pumpe in Abhängigkeit einer mit dem zumindest einen Temperatursensor gemessenen Temperatur und bzw. oder eines mit dem zumindest einen Durchflusssensor gemessenen Durchflusses der Kühlflüssigkeit im Kühlflüssigkeitskreislauf regelbar ist. Durch die Verbindung des zumindest einen Lüfters und der zumindest einen Pumpe mit der Steuereinrichtung können entsprechende Regelkreise gebildet werden und eine optimale Regelung der Kühlung und effiziente Abführung der Verlustwärme erzielt werden. Die Art der jeweiligen Regelung wird vorzugsweise softwaremäßig in der Steuereinrichtung implementiert. Die Änderung von Regelgrößen kann über eine vorhandene Ein- Ausgabeeinrichtung bzw. eine grafische Benutzerschnittstelle beispielsweise an der Schweißstromquelle in bequemer Weise erfolgen.

Optional kann eine Warnvorrichtung zur Abgabe einer Warnung bei Überschreitung einer mit zumindest einem Temperatursensor gemessenen Temperatur über zumindest einen vorgegebenen ersten Temperaturgrenzwert und bzw. oder bei Unterschreitung eines mit zumindest einem Durchflusssensor gemessenen Durchflusses unter einen ersten Durchflussgrenzwert vorgesehen sein. Bei Überschreitung eines bestimmten ersten Temperaturgrenzwerts und bzw. oder bei Unterschreitung eines bestimmten ersten Durchflussgrenzwerts kann eine optische, akustische oder mechanische Warnung abgegeben werden, sodass der Schweißer Kenntnis von der Überschreitung des ersten Temperaturgrenzwerts und bzw. oder Unterschreitung des ersten Durchflussgrenzwerts erlangt und entsprechende Maßnahmen setzen kann. Natürlich können auch mehrere Temperaturgrenzwerte oder Durchflussgrenzwerte festgelegt und unterschiedliche Warnsignale für unterschiedliche Situationen festgelegt werden.

Weiters kann die Steuereinrichtung der Schweißstromquelle zur Abschaltung der Schweißstromquelle im Falle der Überschreitung einer mit zumindest einem Temperatursensor gemessenen Temperatur über einen vorgegebenen zweiten Temperaturgrenzwert und bzw. oder bei Unterschreitung eines mit zumindest einem Durchflusssensor gemessenen Durchflusses unter einen zweiten Durchflussgrenzwert ausgebildet ist. Durch die erzwungene Abschaltung der Schweißvorrichtung nach allfälliger Warnung oder mehreren Warnungen kann bei Überschreitung eines vorgegebenen Temperaturgrenzwerts und bzw. oder bei Unterschreitung eines vorgegebenen Durchflussgrenzwerts eine Fehlfunktion oder Beschädigung von Komponenten der Schweißvorrichtung verhindert werden.

Das Auftreten von Warnungen und bzw. oder Abschaltungen kann ebenso gespeichert werden.

Wie bereits oben erwähnt, ist die Kühlflüssigkeit im Kühlflüssigkeitskreislauf vorzugsweise durch Wasser mit Zusätzen, insbesondere Glykol, Ethanol oder dgl., gebildet.

Gelöst wird die erfindungsgemäße Aufgabe auch durch ein oben genanntes Verfahren zum Betreiben einer Schweißvorrichtung, wobei die Verlustwärme der Schweißstromquelle in einem geschlossenen Kühlluftkreislauf geführt wird, und die Verlustwärme über einen Wärmetauscher im Kühlluftkreislauf an eine in einem geschlossenen Kühlflüssigkeitskreislauf mit zumindest einer Pumpe geführte Kühlflüssigkeit übergeben wird, und die Verlustwärme über einen weiteren Wärmetauscher im Kühlflüssigkeitskreislauf abgeführt und insbesondere verwertet wird. Das Verfahren kann durch relativ einfache konstruktive Maßnahmen relativ leicht implementiert werden. Auch bestehende Schweißvorrichtungen können zur Durchführung des Verfahrens nachgerüstet werden. Zu den durch das Verfahren erzielbaren Vorteilen wird auf die obige Beschreibung der Schweißvorrichtung verwiesen.

Vorteilhafterweise wird eine Temperatur, beispielsweise der Kühlluft im Kühlluftkreislauf und bzw. oder der Kühlflüssigkeit im Kühlflüssigkeitskreislauf mit zumindest einem Temperatursensor gemessen und an die Steuereinrichtung der Schweißstromquelle weitergeleitet wird. Wie bereits oben bei der Schweißvorrichtung erwähnt, resultieren dadurch verschiedene Überwachungs- und Regelungsmöglichkeiten.

Noch weiter verbessert werden können die Überwachungs- und Regelungsmöglichkeiten, wenn ein Durchfluss der Kühlflüssigkeit im Kühlflüssigkeitskreislauf mit zumindest einem Durchflusssensor gemessen und an die Steuereinrichtung der Schweißstromquelle weitergeleitet wird.

Insbesondere der zumindest eine Lüfter des Kühlluftkreislaufs und bzw. oder die zumindest eine Pumpe des Kühlflüssigkeitskreislaufs können in Abhängigkeit einer gemessenen Temperatur und bzw. oder eines gemessenen Durchflusses der Kühlflüssigkeit im Kühlflüssigkeitskreislauf geregelt werden.

Bei Überschreitung einer mit zumindest einem Temperatursensor gemessenen Temperatur über zumindest einen vorgegebenen ersten Temperaturgrenzwert von einer Warnvorrichtung kann eine Warnung abgegeben werden und bzw. oder bei Überschreitung über einen vorgegebenen zweiten Temperaturgrenzwert die Schweißstromquelle durch die Steuereinrichtung abgeschaltet werden.

Gelöst wird die erfindungsgemäße Aufgabe auch durch ein oben genanntes Verfahren zum Betreiben einer Schweißvorrichtung, wobei über den weiteren Wärmetauscher im Kühlflüssigkeitskreislauf Wärme zugeführt und dadurch der Schweißbrenner und bzw. oder das Schlauchpaket und allenfalls ein Drahtvorschub für einen abschmelzbaren Schweißdraht und bzw. oder über den Wärmetauscher im Kühlluftkreislauf die Schweißstromquelle vorgewärmt wird. Dieses Verfahren entspricht grundsätzlich jenem der Abfuhr und insbesondere Verwertung von Abwärme aus der Schweißvorrichtung. Lediglich die Richtung, in der Wärme geführt wird, ist umgekehrt.

Dieses Verfahren eignet sich zum Vorwärmen einer kalten Schweißvorrichtung beispielsweise in kalten Regionen über die Anschlüsse des weiteren Wärmetauschers des Kühlflüssigkeitskreislaufes. Dabei wird keine Verlustwärme von der Schweißvorrichtung abgeführt und verwertet, sondern Wärme zugeführt und auf diese Weise die Schweißvorrichtung auf Betriebsbedingungen gebracht. Bisher musste beispielsweise in besonders kalten Regionen eine Schweißvorrichtung in aufwändiger Weise mit entsprechenden Wärmematten oder dgl. aufgewärmt werden, bevor das Schweißverfahren begonnen werden kann. Dies stellt eine zusätzliche Option bei einer erfindungsgemäß ausgebildeten Schweißvorrichtung dar.

Die vorliegende Erfindung wird anhand der beigefügten Figuren näher erläutert. Darin zeigen:
- Fig. 1: ein Blockschaltbild einer Schweißvorrichtung gemäß dem Stand der Technik mit einer luftgekühlten Schweißstromquelle;
- Fig. 2: ein Blockschaltbild einer Schweißvorrichtung gemäß dem Stand der Technik mit einer luftgekühlten Schweißstromquelle und einem wassergekühlten Schweißbrenner und Schlauchpaket;
- Fig. 3: ein Blockschaltbild einer ersten Ausführungsform der erfindungsgemäßen Schweißvorrichtung, wobei die Kühlluft der Schweißstromquelle über einen Wärmetauscher an einen Kühlflüssigkeitskreislauf übergeben wird;
- Fig. 4: ein Blockschaltbild einer weiteren Ausführungsform der erfindungsgemäßen Schweißvorrichtung, wobei die Kühlluft der Schweißstromquelle über einen Wärmetauscher an einen vorhandenen Kühlflüssigkeitskreislauf zum Kühlen des Schweißbrenners und Schlauchpakets übergeben wird; und
- Fig. 5: eine weitere schematische Darstellung der Schweißvorrichtung mit einer Regelung des Lüfters des Kühlluftkreislaufs und der Pumpe des Kühlflüssigkeitskreislaufs und mit einer Warnvorrichtung zur Warnung bei Überschreitung einer vorgegebenen ersten Temperaturgrenzwerts.

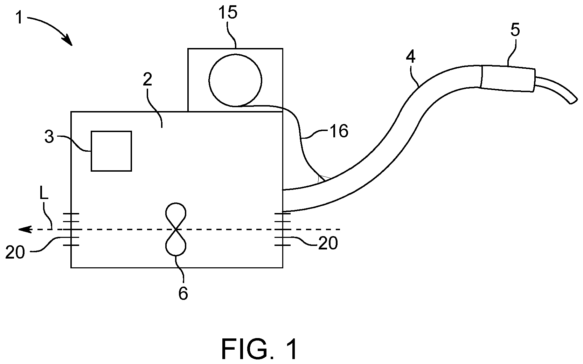

Fig. 1 zeigt ein Blockschaltbild einer Schweißvorrichtung 1 gemäß dem Stand der Technik mit einer luftgekühlten Schweißstromquelle 2. Die Schweißvorrichtung besteht aus der Schweißstromquelle 2 mit einer Steuereinrichtung 3 und einen über ein Schlauchpaket 4 mit der Schweißstromquelle 2 verbundenen Schweißbrenner 5. Im Schlauchpaket verlaufen die elektrischen Leitungen zur Erzeugung eines Lichtbogens zwischen dem Kontaktrohr des Schweißbrenners 5 und einem Werkstück (nicht dargestellt). Ebenfalls im Schlauchpaket 4 kann der abschmelzbare Schweißdraht 16, der von einem Drahtvorschub 15 in Richtung Schweißstelle (und bei manchen Schweißverfahren auch von der Schweißstelle weg) gefördert wird. Über einen Lüfter 6 wird Kühlluft L durch die Schweißstromquelle 2 transportiert und somit die entstandene Verlustwärme abgeführt. Zu diesem Zweck befinden sich meist an der Vorder- und Rückseite der Schweißstromquelle 2 entsprechende Kühlungsöffnungen 20 an der Schweißstromquelle 2. Durch das Ansaugen von Kühlluft L können auch Verschmutzungen und Feuchtigkeit bzw. Wasser ins Innere der Schweißstromquelle 2 gelangen und zu Problemen und einer Reduktion der Lebensdauer führen. Die an die Umgebung abgegebene Verlustwärme wird nicht genutzt und führt zu einer Erwärmung der Umgebung. Das kann insbesondere bei Räumen mit sehr vielen Schweißvorrichtungen 1 oder unter beengten Platzverhältnissen zu Problemen führen und zusätzliche Kühlmaßnahmen der Umgebung erfordern.

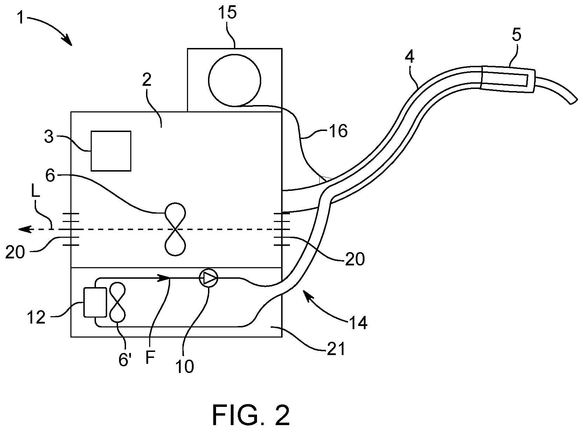

Fig. 2 zeigt ein Blockschaltbild einer Schweißvorrichtung 1 gemäß dem Stand der Technik mit einer luftgekühlten Schweißstromquelle 2 und einem wassergekühlten Schweißbrenner 5 und Schlauchpaket 4. Zusätzlich zur Ausführungsform gemäß Fig. 1 wird über einen Kühlflüssigkeitskreislauf 14 mit Kühlflüssigkeit F von einem Kühlmodul 21, welches unterhalb der Schweißstromquelle 2 angeordnet sein kann, der Schweißbrenner 5 und das Schlauchpaket 4 gekühlt. Über einen Luft-Wasser-Kühler 12 und einen Lüfter 6' kann die Verlustwärme des Schweißbrenners 5 und Schlauchpakets 4 abgeführt werden. Wie bei der Schweißvorrichtung 1 gemäß Fig.1 wird auch hier die Verlustwärme an die Umgebung abgegeben und nicht verwertet.

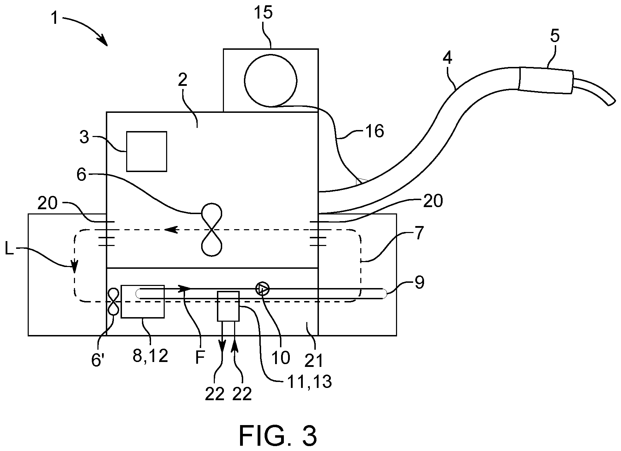

Fig. 3 zeigt ein Blockschaltbild einer ersten Ausführungsform der erfindungsgemäßen Schweißvorrichtung 1, wobei die Kühlluft L bzw. Verlustwärme der Schweißstromquelle 2 in einem geschlossenen Kühlluftkreislauf 7 geführt wird. Zu diesem Zweck wird beispielsweise die Kühlluft L an den Kühlöffnungen 20 an der Vorder- und Rückseite der Schweißstromquelle über entsprechende Elemente umgelenkt und beispielsweise über ein unterhalb der Schweißstromquelle angeordnetes Kühlmodul 21 zu einem geschlossenen Kühlluftkreislauf 7 verbunden. Im Kühlluftkreislauf 7 ist ein Wärmetauscher 8 zur Übergabe der Verlustwärme an eine in einem geschlossenen Kühlflüssigkeitskreislauf 9 mit zumindest einer Pumpe 10 geführte Kühlflüssigkeit F angeordnet. Als Kühlflüssigkeit F kommt meist Wasser mit geeigneten Zusätzen, wie zum Beispiel Glykol oder Ethanol zur Anwendung. Ein weiterer Lüfter 6'**,** der beispielsweise im Kühlmodul 21 angeordnet ist, kann die Förderung der Kühlluft L verstärken. Im Kühlflüssigkeitskreislauf 9 befindet sich ein weiterer Wärmetauscher 11, über den die Verlustwärme der Schweißstromquelle 2 abgeführt und insbesondere verwertet werden kann. Zu diesem Zweck sind auf der Sekundärseite des weiteren Wärmetauschers 11, über welche die Verlustwärme an ein entsprechendes Medium (Gas oder Flüssigkeit) abgegeben wird zum Abführen und Verwerten der Verlustwärme zwei Anschlüsse 22 vorgesehen. Über diese kann ein Medium angeschlossen werden, an das die Verlustwärme abgegeben wird und beispielsweise zum Einsatz als Prozesswärme in einem weiteren Prozess oder zum Heizen eines Raumes verwendet werden. Dadurch kann die Verlustwärme sinnvoll eingesetzt und Energie gespart werden und verhindert werden, dass die Umgebung der Schweißvorrichtung 1 aufgewärmt wird. Durch den geschlossenen Kühlluftkreislauf 7 der Schweißstromquelle 2 wird auch verhindert, dass Verschmutzungen oder Feuchtigkeit oder Wasser in die Schweißvorrichtung 1 gelangen, wodurch die Wartungsintervalle und die Lebensdauer der Schweißvorrichtung 1 erhöht werden kann.

Bei neuen Schweißvorrichtungen kann natürlich der geschlossene Kühlluftkreislauf 7 und der Kühlflüssigkeitskreislauf 9 und die Wärmetauscher 8, 11 in geeigneter Weise in der Schweißstromquelle 2 integriert werden.

Der Wärmetauscher 8 im Kühlluftkreislauf 7 ist vorzugsweise durch einen geeigneten Luft-Wasser-Kühler 12 gebildet. Der weitere Wärmetauscher 11 im Kühlflüssigkeitskreislauf 9 kann durch einen Plattenwärmetauscher 13 gebildet sein.

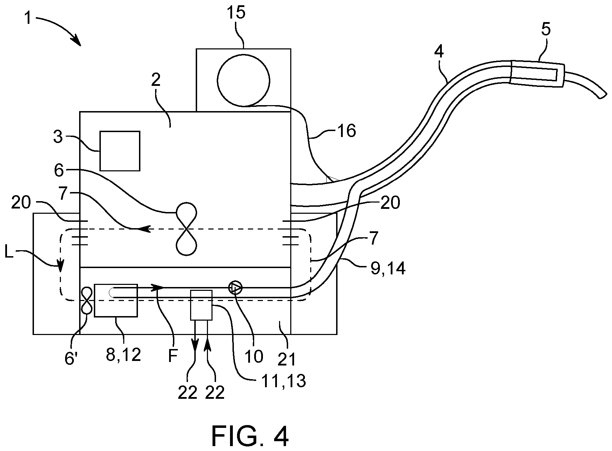

Fig. 4 zeigt ein Blockschaltbild einer weiteren Ausführungsform der erfindungsgemäßen Schweißvorrichtung 1, wobei die Kühlluft L der Schweißstromquelle 2 über einen Wärmetauscher 8 an einen vorhandenen Kühlflüssigkeitskreislauf 14 zum Kühlen des Schweißbrenners 5 und Schlauchpakets 4 übergeben wird. Im Gegensatz zu der Ausführungsvariante gemäß Fig. 3 ist hier der Kühlflüssigkeitskreislauf 9 nicht extra aufgebaut, sondern durch entsprechende Erweiterung eines vorhandenen Kühlflüssigkeitskreislaufs 14 zum Kühlen eines Schweißbrenners 5 und Schlauchpakets 4 (siehe auch Fig. 2) realisiert.

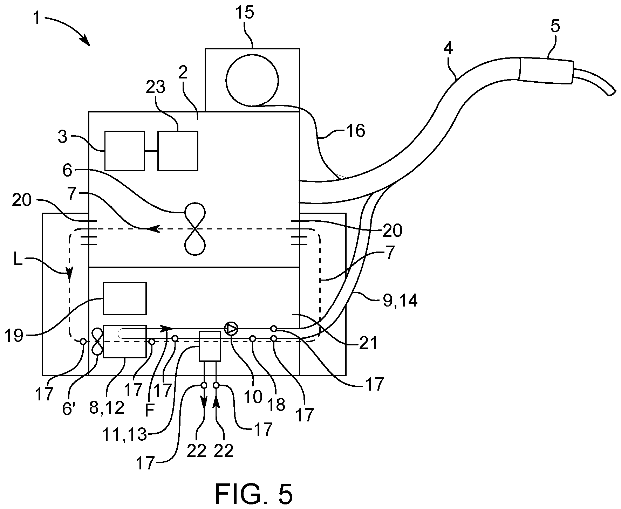

Fig. 5 zeigt eine weitere schematische Darstellung der Schweißvorrichtung 1 mit einer Regelung des zumindest einen Lüfters 6, 6' des Kühlluftkreislaufs 7 und der Pumpe 10 des Kühlflüssigkeitskreislaufs 9. Mit zumindest einem Temperatursensor 17 wird an geeigneten Stellen die Temperatur Tᵢ der Kühlluft L oder die Temperatur Tᵢ der Kühlflüssigkeit F gemessen und an die Steuereinrichtung 3 weitergeleitet bzw. in einem Speicher 23 gespeichert. Beispielsweise eignet sich eine Temperaturmessung der Kühlluft L vor und nach dem Wärmetauscher 8 und eine Temperaturmessung der Kühlflüssigkeit F vor und nach dem weiteren Wärmetauscher 11 im Kühlflüssigkeitskreislauf 9. Auch die Temperatur bei den sekundären Anschlüssen 22 des weiteren Wärmetauschers 11, wo die Verlustwärme abgeführt wird, kann hilfreich und für die Regelung des Verfahrens zweckmäßig sein. Zusätzlich kann zumindest ein Durchflusssensor 18 zur Messung des Durchflusses der Kühlflüssigkeit F im Kühlflüssigkeitskreislauf 9 vorgesehen sein. Die Temperatursensoren 17 und Durchflusssensoren 18 sind ebenso wie der zumindest eine Lüfter 6, 6' und die zumindest eine Pumpe 10 mit der Steuereinrichtung 3 verbunden (nicht dargestellt). Dadurch können die gemessenen Temperaturen Tᵢ und der gemessene Durchfluss Qⱼ zur Überwachung oder Regelung herangezogen werden. Selbstverständlich können die gemessenen Temperaturen Tᵢ und der gemessene Durchfluss Qⱼ auch nur zu Informationszwecken angezeigt oder zu Dokumentationszwecken im Speicher 23 gespeichert werden.

Weiters ist in Fig. 5 eine Warnvorrichtung 19 zur Warnung bei Überschreitung eines vorgegebenen ersten Temperaturgrenzwerts T_{G1} und bzw. oder Unterschreitung eines vorgegebenen ersten Durchflussgrenzwerts Q_{G1} vorgesehen. Bei Überschreitung einer mit zumindest einem Temperatursensor 17 gemessenen Temperatur Tᵢ über zumindest einen vorgegebenen ersten Temperaturgrenzwert T_{G1} und bzw. oder Unterschreitung eines mit zumindest einem Durchflusssensor 18 gemessenen Durchflusses Qⱼ unter einen vorgegebenen ersten Durchflussgrenzwert Q_{G1} kann eine optische, akustische oder mechanische Warnung abgegeben werden, sodass der Schweißer Kenntnis von der Überschreitung des ersten Temperaturgrenzwerts T_{G1} und bzw. oder von der Unterschreitung eines ersten Durchflussgrenzwerts Q_{G1} erlangt und entsprechende Maßnahmen setzen kann. Weiters kann die Steuereinrichtung 3 der Schweißstromquelle 2 zur Abschaltung der Schweißstromquelle 2 im Falle der Überschreitung einer mit zumindest einem Temperatursensor 17 gemessenen Temperatur Tᵢ über einen vorgegebenen zweiten Temperaturgrenzwert T_{G2} und bzw. oder im Falle der Unterschreitung eines mit zumindest einem Durchflusssensor 18 gemessenen Durchflusses Qⱼ unter einen vorgegebenen zweiten Durchflussgrenzwert Q_{G2} ausgebildet sein. Durch die erzwungene Abschaltung der Schweißvorrichtung 1 nach allfälliger Warnung oder mehreren Warnungen kann bei Überschreitung eines vorgegebenen zweiten Temperaturgrenzwerts T_{G2} und bzw. oder Unterschreitung eines vorgegebenen zweiten Durchflussgrenzwerts Q_{G2} eine Fehlfunktion oder Beschädigung von Komponenten der Schweißvorrichtung 1 verhindert werden.

Die oben beschriebene Schweißvorrichtung 1 und das oben beschriebene Verfahren zum Betreiben einer Schweißvorrichtung 1 ermöglichen einen optimalen Betrieb bei geeigneten Betriebstemperaturen der Komponenten der Schweißvorrichtung 1 bei gleichzeitiger effizienter Abführung und insbesondere Verwertung der entstehenden Verlustwärme. Der technische Aufwand und somit die Kosten für die Implementierung halten sich in Grenzen.

## Patentansprüche

1. Schweißvorrichtung (1) mit einer Schweißstromquelle (2), einer Steuereinrichtung (3) und einem über ein Schlauchpaket (4) mit der Schweißstromquelle (2) verbunden Schweißbrenner (5), wobei in der Schweißstromquelle (2) zumindest ein Lüfter (6, 6') zum Abführen einer in der Schweißstromquelle (2) entstehenden Verlustwärme angeordnet ist, **dadurch gekennzeichnet, dass** ein geschlossener Kühlluftkreislauf (7) zur Führung der Verlustwärme der Schweißstromquelle (2) vorgesehen ist, und im Kühlluftkreislauf (7) ein Wärmetauscher (8) zur Übergabe der Verlustwärme an eine in einem geschlossenen Kühlflüssigkeitskreislauf (9) mit zumindest einer Pumpe (10) geführte Kühlflüssigkeit (F), und dass im Kühlflüssigkeitskreislauf (9) ein weiterer Wärmetauscher (11) zum Abführen und insbesondere zum Verwerten der Verlustwärme angeordnet ist.

2. Schweißvorrichtung (1) nach Anspruch 1, **dadurch gekennzeichnet, dass** der Wärmetauscher (8) im Kühlluftkreislauf (7) durch einen Luft-Wasser-Kühler (12) gebildet ist.

3. Schweißvorrichtung (1) nach Anspruch 1 oder 2, **dadurch gekennzeichnet, dass** der weitere Wärmetauscher (11) im Kühlflüssigkeitskreislauf (9) durch einen Plattenwärmetauscher (13) gebildet ist.

4. Schweißvorrichtung (1) nach einem der Ansprüche 1 bis 3, **dadurch gekennzeichnet, dass** der Kühlflüssigkeitskreislauf (9) durch Erweiterung eines vorhandenen Kühlflüssigkeitskreislaufs (14) zur Kühlung des Schweißbrenners (5) und bzw. oder Schlauchpakets (4) und bzw. oder eines Drahtvorschubs (15) für einen abschmelzbaren Schweißdraht (16) gebildet ist.

5. Schweißvorrichtung (1) nach einem der Ansprüche 1 bis 4, **dadurch gekennzeichnet, dass** zumindest ein Temperatursensor (17) zur Messung einer Temperatur (Tᵢ), beispielsweise der Kühlluft (L) im Kühlluftkreislauf (7) und bzw. oder der Kühlflüssigkeit (F) im Kühlflüssigkeitskreislauf (9), vorgesehen und mit der Steuereinrichtung (3) der Schweißstromquelle (2) verbunden ist.

6. Schweißvorrichtung (1) nach einem der Ansprüche 1 bis 5, **dadurch gekennzeichnet, dass** zumindest ein Durchflusssensor (18) zur Messung des Durchflusses (Qⱼ) der Kühlflüssigkeit (F) im Kühlflüssigkeitskreislauf (9) vorgesehen und mit der Steuereinrichtung (3) der Schweißstromquelle (2) verbunden ist.

7. Schweißvorrichtung nach Anspruch 5 oder 6, **dadurch gekennzeichnet, dass** der zumindest eine Lüfter (6, 6') des Kühlluftkreislaufs (7) und bzw. oder die zumindest eine Pumpe (10) des Kühlflüssigkeitskreislaufs (9) mit der Steuereinrichtung (3) verbunden ist, sodass der zumindest eine Lüfter (6, 6') und bzw. oder die zumindest eine Pumpe (10) in Abhängigkeit einer mit dem zumindest einen Temperatursensor (17) gemessenen Temperatur (Tᵢ) und bzw. oder eines mit dem zumindest einen Durchflusssensor (18) gemessenen Durchflusses (Qⱼ) der Kühlflüssigkeit (F) im Kühlflüssigkeitskreislauf (9) regelbar ist.

8. Schweißvorrichtung (1) nach einem der Ansprüche 5 bis 7, **dadurch gekennzeichnet, dass** eine Warnvorrichtung (19) zur Abgabe einer Warnung bei Überschreitung einer mit zumindest einem Temperatursensor (17) gemessenen Temperatur (Tᵢ) über zumindest einen vorgegebenen ersten Temperaturgrenzwert (T_{G1}) und bzw. oder bei Unterschreitung eines mit zumindest einem Durchflusssensor (18) gemessenen Durchflusses (Qⱼ) unter einen ersten Durchflussgrenzwert (Q_{G1}) vorgesehen ist.

9. Schweißvorrichtung (1) nach einem der Ansprüche 5 bis 8, **dadurch gekennzeichnet, dass** die Steuereinrichtung (3) der Schweißstromquelle (2) zur Abschaltung der Schweißstromquelle (2) im Falle der Überschreitung einer mit zumindest einem Temperatursensor (17) gemessenen Temperatur (Tᵢ) über einen vorgegebenen zweiten Temperaturgrenzwert (T_{G2}) und bzw. oder bei Unterschreitung eines mit zumindest einem Durchflusssensor (18) gemessenen Durchflusses (Qⱼ) unter einen zweiten Durchflussgrenzwert (Q_{G2}) ausgebildet ist.

10. Verfahren zum Betreiben einer Schweißvorrichtung (1) mit einer Schweißstromquelle (2), einer Steuereinrichtung (3) und einem über ein Schlauchpaket (4) mit der Schweißstromquelle (2) verbunden Schweißbrenner (5), wobei eine in der
Schweißstromquelle (2) entstehende Verlustwärme mit zumindest einem Lüfter (6, 6') abgeführt wird, **dadurch gekennzeichnet, dass** die Verlustwärme der Schweißstromquelle (2) in einem geschlossenen Kühlluftkreislauf (7) geführt wird, und die Verlustwärme über einen Wärmetauscher (8) im Kühlluftkreislauf (7) an eine in einem geschlossenen Kühlflüssigkeitskreislauf (9) mit zumindest einer Pumpe (10) geführte Kühlflüssigkeit (F) übergeben wird, und die Verlustwärme über einen weiteren Wärmetauscher (11) im Kühlflüssigkeitskreislauf (9) abgeführt und insbesondere verwertet wird.

11. Verfahren nach Anspruch 10, **dadurch gekennzeichnet, dass** eine Temperatur (Tᵢ), beispielsweise der Kühlluft (L) im Kühlluftkreislauf (7) und bzw. oder der Kühlflüssigkeit (F) im Kühlflüssigkeitskreislauf (9) mit zumindest einem Temperatursensor (17) gemessen und an die Steuereinrichtung (3) der Schweißstromquelle (2) weitergeleitet wird.

12. Verfahren nach Anspruch 10 oder 11, **dadurch gekennzeichnet**, ein Durchfluss (Qⱼ) der Kühlflüssigkeit (F) im Kühlflüssigkeitskreislauf (9) mit zumindest einem Durchflusssensor (18) gemessen und an die Steuereinrichtung (3) der Schweißstromquelle (2) weitergeleitet wird.

13. Verfahren nach Anspruch 11 oder 12, **dadurch gekennzeichnet, dass** der zumindest eine Lüfter (6, 6') des Kühlluftkreislaufs (7) und bzw. oder die zumindest eine Pumpe (10) des Kühlflüssigkeitskreislaufs (9) in Abhängigkeit einer gemessenen Temperatur (Tᵢ) und bzw. oder eines gemessenen Durchflusses (Qⱼ) der Kühlflüssigkeit (F) im Kühlflüssigkeitskreislauf (9) geregelt wird.

14. Verfahren nach einem der Ansprüche 11 bis 13, **dadurch gekennzeichnet, dass** bei Überschreitung einer mit zumindest einem Temperatursensor (17) gemessenen Temperatur (Tᵢ) über einen vorgegebenen ersten Temperaturgrenzwert (T_{G1}) und bzw. oder bei Unterschreitung eines mit zumindest einem Durchflusssensor (18) gemessenen Durchflusses (Qⱼ) unter einen vorgegebenen ersten Durchflussgrenzwert (Q_{G1}) von einer Warnvorrichtung (19) eine Warnung abgegeben wird und bzw. oder bei Überschreitung über einen vorgegebenen zweiten Temperaturgrenzwert (T_{G2}) und bzw. oder bei Unterschreitung eines mit zumindest einem Durchflusssensor (18) gemessenen Durchflusses (Qⱼ) unter einen vorgegebenen zweiten Durchflussgrenzwert (Q_{G2}) die Schweißstromquelle (2) durch die Steuereinrichtung (3) abgeschaltet wird.

15. Verfahren nach einem der Ansprüche 10 bis 14, **dadurch gekennzeichnet, dass** über den weiteren Wärmetauscher (11) im Kühlflüssigkeitskreislauf (9) Wärme zugeführt und dadurch der Schweißbrenner (5) und bzw. oder das Schlauchpaket (4) und allenfalls ein Drahtvorschub (15) für einen abschmelzbaren Schweißdraht (16) und bzw. oder über den Wärmetauscher (8) im Kühlluftkreislauf (7) die Schweißstromquelle (2) vorgewärmt wird.
